# FASCICULE DE BREVET EUROPEEN

(11) **EP 1 590 583 B1**
(45) Date de publication et mention de la délivrance du brevet: **09.09.2009**
(21) Numéro de dépôt: 04707561.9
(22) Date de dépôt: 03.02.2004
(51) Int. Cl.: F16H 61/66, B60W 30/18

(54) **PROCEDE DE COMMANDE D'UNE CHAINE DE TRACTION A VARIATION CONTINUE D'UN VEHICULE AUTOMOBILE ADAPTE POUR AMELIORER LES CARACTERISTIQUES ACOUSTIQUES**
VERFAHREN ZUR STEUERUNG EINES STUFENLOSEN ANTRIEBSTRANGES EINES KRAFTFAHRZEUGS ZUR VERBESSERUNG DER AKUSTISCHEN EIGENSCHAFTEN
METHOD OF CONTROLLING A CONTINUOUSLY-VARIABLE TRACTION CHAIN OF A MOTOR VEHICLE, WHICH IS DESIGNED TO IMPROVE NOISE CHARACTERISTICS

(30) Priorité: 04.02.2003 FR 0301273
(43) Date de publication de la demande: 02.11.2005
(73) Titulaire: Peugeot Citroën Automobiles S.A., 78140 Vélizy Villacoublay (FR)
(72) Inventeur: RIMAUX, Stéphane, F-92190 Meudon (FR)
(86) Numéro de dépôt international: PCT/FR2004/000249
(87) Numéro de publication internationale: WO 2004/074138

(56) Documents cités:
- EP-A- 1 079 149
- DE-A- 4 239 133
- FR-A- 2 729 343
- FR-A- 2 760 060
- US-A- 4 704 683

## Description

L'invention concerne un procédé de commande d'une chaîne de traction à variation continue d'un véhicule automobile.

Il est connu de US-A-4 704 683 et EP-A-1 079 149 qu'une chaîne de traction à variation continue fonctionne en estimant la valeur d'une variable de commande d'accélération et la valeur de la vitesse du véhicule. US-A-4 704 683 estime, en outre, la valeur de la vitesse de rotation de l'arbre de sortie moteur et commande la vitesse de rotation en sortie moteur en fonction des valeurs estimées.

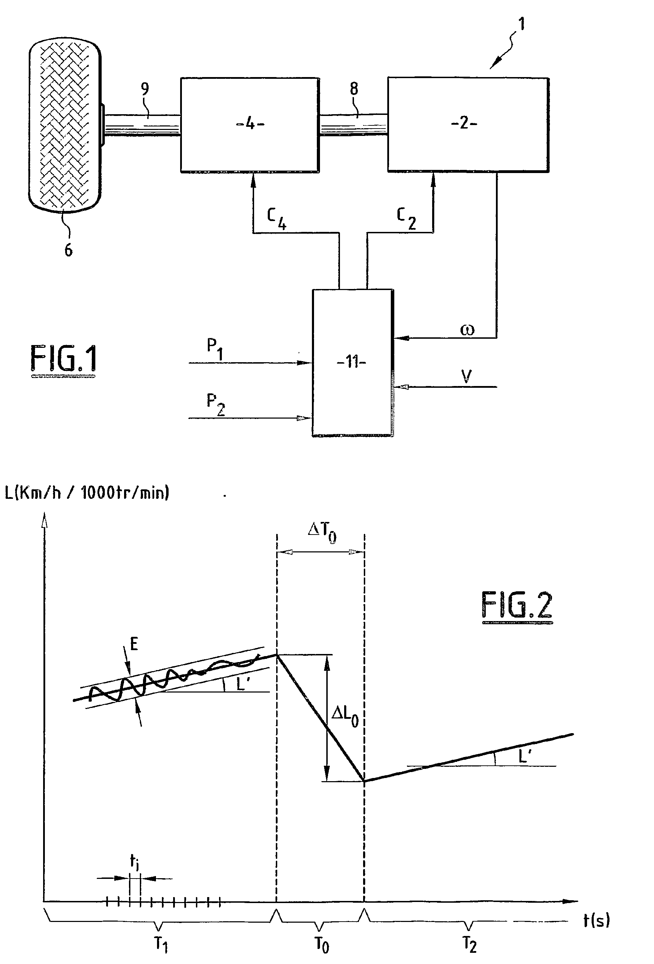

De façon connue, comme cela a été représenté à la Figure 1, la chaîne de traction 1 comporte un ensemble-moteur 2, un variateur de vitesse 4 et un ensemble de roues motrices 6.

La chaîne de traction 1 comporte en outre un certain nombre d'éléments de transmission, en particulier un arbre de sortie moteur 8 transmettant un mouvement de rotation de la sortie de l'ensemble-moteur 2 au variateur 4, ainsi qu'un arbre de roue 9 transmettant le mouvement de rotation en sortie du variateur 4' à l'ensemble de roue motrice 6, par l'intermédiaire d'éléments de transmission, non représentés mais bien connus dans l'état de la technique.

En vue d'alléger la description qui va suivre, on désignera l'ensemble-moteur par le terme « moteur », étant entendu que l'ensemble-moteur 2 peut être constitué d'un moteur de type thermique seul, mais également de moteurs de types différents ou encore d'une association de plusieurs moteurs, par exemple d'un moteur thermique et d'un moteur électrique dans le cas de véhicules hydrides.

De même, on a représenté l'ensemble de roues motrices 6 par l'une de ses roues motrices, étant entendu que l'ensemble de roues motrices 6 comporte le plus souvent deux ou quatre roues.

Les éléments de transmission qui n'ont pas d'influence sur l'exposé de l'invention n'ont pas été représentés sur le schéma de la Figure 1.

Le variateur 4 est adapté pour modifier de façon continue le rapport des vitesses de rotation de l'arbre de

roue 9 et de l'arbre de sortie moteur 8, ce rapport étant directement lié au rapport de démultiplication L, qui donne le rapport de la vitesse V du véhicule sur la vitesse de rotation ω de l'arbre de sortie moteur 8, ou régime moteur, par une fonction continue.

Le pilotage du régime moteur et du variateur 4 est assuré par une fonction dans un calculateur 11 (par exemple le calculateur associé au moteur thermique, ou le calculateur de « boîte de vitesse », ou un autre calculateur du véhicule). Celui-ci reçoit un certain nombre d'informations relatives au fonctionnement du véhicule, et notamment de la chaîne de traction et de la commande d'accélération actionnée par le conducteur. Il émet en réponse, respectivement vers le moteur 2 et le variateur 4, des signaux de commande C₂, C₄ significatifs respectivement d'une consigne de couple moteur, et d'une consigne de démultiplication ou de rapport de vitesse de rotation.

Le véhicule comporte un certain nombre de capteurs et/ou de modules de calcul permettant d'estimer les valeurs d'un ensemble de variables correspondant aux informations à fournir au calculateur 11 pour piloter le moteur 2 et le variateur 4. En particulier, le véhicule peut être pourvu d'un capteur de position de la pédale d'accélérateur, adapté pour fournir au calculateur 11 l'estimation de la valeur de la variable de commande d'accélération P₁, exprimant par exemple un pourcentage d'enfoncement de la pédale d'accélération par rapport à sa course totale.

On dispose également sur le véhicule d'un capteur de vitesse du véhicule qui fournit au calculateur 11 une estimation de la valeur de vitesse du véhicule V.

Des moyens d'estimation de la valeur de la vitesse de rotation ω de l'arbre de sortie moteur 8 sont également prévus, permettant de fournir l'information correspondante au calculateur 11.

On connaît dans l'état de la technique des procédés de commande de chaîne de traction à variation continue, dans lesquels on définit un intervalle de temps élémentaire tᵢ et, à chaque instant correspondant à chaque intervalle de temps élémentaire :
on estime la valeur d'une variable de commande d'accélération ;
on estime la valeur de la vitesse du véhicule ;
on estime la valeur de la vitesse de rotation de l'arbre de sortie moteur ; et
on commande la vitesse de rotation de l'arbre de sortie moteur (ou le rapport de démultiplication du variateur) en fonction desdites valeurs estimées.

Les stratégies de pilotage utilisées dans les procédés de commande connus conduisent parfois à des performances d'excellente qualité d'une part en terme d'optimisation de la consommation énergétique, et d'autre part en terme de traduction de la volonté du conducteur en vitesse du véhicule et couple à la roue. Ces stratégies de pilotage se présentent sous la forme de cartographies préenregistrées.

En revanche, les procédés connus produisent des sensations mal acceptées par les conducteurs, en particulier la sensation de patinage due aux évolutions relatives du régime moteur et de la vitesse du véhicule. On constate en outre des variations fréquentes et importantes du régime pour de faibles variations de la position de la pédale d'accélérateur.

Un défaut extrêmement important des chaînes de traction à variation continue, fonctionnant suivant les procédés précités, consiste, du fait des inconvénients cités plus haut, dans les nuisances acoustiques, dues aussi bien au niveau sonore atteint, qu'au décalage entre « l'attente » des utilisateurs et le bruit généré par le moteur.

L'invention se fixe comme objectif principal de remédier aux inconvénients précités, en proposant un procédé de commande du type décrit précédemment, qui permette de ramener les sensations de patinage, les variations de régime moteur et les caractéristiques acoustiques, dans des domaines proches de ceux correspondant aux chaînes de traction de type classique (notamment à changement de rapport manuel).

A cet effet, suivant l'invention, on réalise la commande de la façon suivants :
- on détermine un mode de fonctionnement parmi un mode permanent et un mode transitoire, en fonction d'un ensemble de variables comprenant lesdites valeurs estimées ;
- on corrige la valeur de vitesse de rotation de l'arbre de sortie de sorte que

- si le mode déterminé est le mode permanent, la moyenne glissante du rapport de démultiplication sur une période de plusieurs intervalles de temps élémentaires, est comprise entre une première valeur de seuil négative et une deuxième valeur de seuil positive ; et on limite à chaque instant la valeur du rapport de démultiplication dans une plage de valeurs centrées sur une valeur moyenne égale au rapport de démultiplication à l'instant initial de la phase de fonctionnement en mode permanent, augmentée du produit de ladite variation moyenne par unité de temps, par la période de temps entre ledit instant initial et l'instant considéré, ladite plage étant d'amplitude prédéterminée ;
- si le mode déterminé est le mode transitoire, ladite moyenne glissante du rapport de démultiplication est en dehors de la plage de valeurs définie par les première et deuxième valeurs de seuil.

Suivant d'autres caractéristiques du procédé selon l'invention :
- la première valeur de seuil est, en valeur absolue, égale à la deuxième valeur de seuil ;
- la période est d'une durée supérieure à 1 seconde, et la première valeur de seuil et la deuxième valeur de seuil sont, en valeur absolue, comprises entre 0,35 et 0,45 km/h par 1000 tr/min/sec ;
- on limite la durée d'une phase en mode transitoire à une valeur comprise entre une troisième et une quatrième valeurs de seuil ;
- la troisième valeur de seuil est sensiblement égale à 0,3 seconde ;
- la quatrième valeur de seuil est sensiblement égale à 0,7 seconde ;
- on limite la valeur absolue de la variation moyenne du rapport de démultiplication, sur une phase de fonctionnement en mode transitoire comprise entre deux changements de modes consécutifs, à une valeur comprise entre une cinquième et une sixième valeurs de seuil positives ;
- lors du changement de mode initial de la phase de fonctionnement en mode transitoire, on détermine le sens de variation du rapport de démultiplication et :
   - si le sens de variation est positif, on affecte une première et une deuxième valeurs fixes respectivement à la cinquième valeur de seuil et à la sixième valeur de seuil ;
   - si le sens de variation est négatif, on affecte une troisième et une quatrième valeurs fixes respectivement à la cinquième valeur de seuil et à la sixième valeur de seuil ;
- la première valeur fixe est supérieure à la troisième valeur fixe, et la deuxième valeur fixe est supérieure à la quatrième valeur fixe ;
- la première valeur fixe est sensiblement égale à 35 km/h/1000 tr/min ;
- la deuxième valeur fixe est sensiblement égale à 80 km/h/1000 tr/min ;
- la troisième valeur fixe est sensiblement égale à 25 km/h/1000 tr/min ;
- la quatrième valeur fixe est sensiblement égale à 50 km/h/1000 tr/min ;
- ladite amplitude est sensiblement égale à 50 tr/min ;
- la variable de commande d'accélération représente la position de la pédale d'accélération ;
- on estime la pente de la route et l'ensemble de variables comprend la valeur de pente estimée ; et
- on définit une période de détermination de mode, et on détermine que le mode de fonctionnement est le mode transitoire dans l'un au moins des cas suivantes :
   - sur ladite période de détermination de mode, la variation de la valeur de vitesse et la variation de la valeur de pente sont, en valeur absolue, inférieures à des valeurs de seuil respectives prédéterminées, et la variation de la valeur de la variable de commande d'accélération est, en valeur absolue, supérieure à une valeur de seuil prédéterminée ;
   - sur ladite période de détermination de mode, la variation de la valeur de la variable de commande d'accélération et la variation de la valeur de pente sont, en valeur absolue, inférieures à des valeurs de seuil respectives prédéterminées, et la variation de la valeur de vitesse et, en valeur absolue, supérieure à une valeur de seuil prédéterminé ; et
   - sur ladite période de détermination de mode, la variation de la valeur de la variable de commande d'accélération et la variation de la valeur de vitesse sont, en valeur absolue, inférieures à des valeurs de seuil respectives prédéterminées, et la variation de la valeur de pente est, en valeur absolue, supérieure à une valeur de seuil prédéterminée.

L'invention va maintenant être décrite avec plus de détails en se référant à la Figure 2, représentant un graphe d'évolution dans le temps du rapport de démultiplication égal au rapport de la vitesse linéaire du véhicule V sur la vitesse de rotation ω de l'arbre de sortie moteur, dans le cas d'un procédé conforme à l'invention.

En se référant à nouveau à la Figure 1, on mentionnera que le mode de réalisation de l'invention qui va être décrit à présent consiste en un procédé de commande utilisant des valeurs estimées à chaque instant tᵢ des variables P₁, ω (ou L), V décrites précédemment, ainsi qu'une variable de pente P₂ représentant la pente de la route. Cette variable P₂ est estimée au moyen d'un capteur ou de tout moyen de calcul adapté, qui ne font pas l'objet de l'invention et qui ne seront donc pas décrits plus en détail.

L'ensemble de variables peut également ne pas comporter la variable mesurée de démultiplication L.

On associe certaines phases de fonctionnement du variateur à un mode de fonctionnement soit « permanent », soit « transitoire ».

En effet, le calculateur 11 fonctionne en utilisant des cartographies adaptées pour faire fonctionner le moteur 2 et le variateur 4 suivant des modes que l'on peut assimiler respectivement à des modes avec rapport de démultiplication constant, et de changement de rapport, tels que définis dans le cas d'une chaîne de traction de type classique, à rapports discrets.

Un mode permanent, correspondant à un mode de rapport fixe ou imposé, se caractérise par un intervalle de temps pouvant être relativement long T₁, T₂ et une faible variation, sur cet intervalle de temps, de la démultiplication L.

Un mode de transition, comparable à un mode de changement de rapport se caractérise par une phase T₀ de durée relativement courte, et une variation importante du rapport de démultiplication L.

Sur la Figure 2, on a représenté une première phase T₁ et une deuxième phase T₂ à rapport imposé, séparées par une phase de changement de rapport T₀.

La transition de la première T₁ à la deuxième T₂ de ces trois phases peut s'assimiler à un changement de rapport de vitesse, tel que défini dans le cas de rapports discrets, d'un rapport de vitesse donné à un rapport inférieur.

Dans le procédé suivant l'invention, on détermine à chaque instant tᵢ correspondant à un intervalle de temps élémentaire du calculateur 11 le mode de fonctionnement de la chaîne de traction 1 parmi les deux modes permanent et transitoire.

L'intervalle de temps élémentaire tᵢ étant typiquement de l'ordre de la dizaine de millisecondes (typiquement 10 ms.), on définit une période d'amplitude beaucoup plus importante, par exemple de l'ordre de la seconde, au terme de laquelle on définit le mode de fonctionnement en cours, par analyse de certaines des variables P₁, P₂, ω (ou L), V fournies au calculateur 11.

Une option de stratégie consiste par exemple à déterminer que le mode de fonctionnement est le mode transitoire dans l'un au moins des cas suivants :
(i) Si, sur ladite période de détermination de mode, la variation de la valeur de vitesse V et la variation de la valeur de pente P₂ sont, en valeur absolue, inférieures à des valeurs de seuil respectives prédéterminées, et la variation de la valeur de la variable de commande d'accélération P₁ est, en valeur absolue, supérieure à une valeur de seuil prédéterminée.
   Ce cas correspond à des conditions de vitesse et de pente quasiment constantes, et à une variation importante et rapide de la position de la pédale d'accélérateur. Cette situation peut conduire à un non-respect des conditions prédéfinies dans les cartographies d'optimisation du fonctionnement du moteur 2 et du variateur 4, du fait de l'inertie du véhicule et de la chaîne de traction.
(ii) Si, sur ladite période de détermination de mode, la variation de la valeur de la variable de commande d'accélération P₁ et la variation de la valeur de pente P₂ sont, en valeur absolue, inférieures à des valeurs de seuil respectives prédéterminées, et la variation de la valeur de vitesse V est, en valeur absolue, supérieure à une valeur de seuil prédéterminée.
   Ce cas correspond à des conditions de position de pédale d'accélérateur et de pente quasiment constantes, et à une variation de vitesse importante, par exemple supérieure à 20km/h.
(iii) Si, sur ladite période de détermination de mode, la variation de la valeur de la variable de commande d'accélération P₁ et la variation de la valeur de vitesse V sont, en valeur absolue, inférieures à des valeurs de seuil respectives prédéterminées, et la variation de la valeur de pente P₂ est, en valeur absolue, supérieure à une valeur de seuil prédéterminée.

Ces conditions correspondent à une position de la pédale d'accélérateur et une vitesse du véhicule V quasiment constantes, et à une variation de pente importante, par exemple supérieure à 4%.

Lorsque le mode de fonctionnement est déterminé, le calculateur 11 corrige la valeur de vitesse de rotation ω de l'arbre de sortie 8 du moteur 2, en agissant sur celui-ci de la façon suivants :
- si le mode déterminé est le mode permanent, la moyenne glissante L' du rapport de démultiplication L sur une période T de plusieurs intervalles de temps élémentaires tᵢ, est comprise entre une première valeur de seuil S₁ négative et une deuxième valeur de seuil S₂ positive ;
- si le mode déterminé est le mode transitoire, ladite moyenne glissante L' du rapport de démultiplication L est en dehors de la plage de valeurs définie par les première S₁ et deuxième S₂ valeurs de seuil.

La période T sur laquelle on réalise la moyenne glissante est de préférence d'une durée supérieure à 1 seconde, en restant de l'ordre de la seconde.

En supposant, que l'évolution du rapport de démultiplication L avec le temps t, peut être représenté, comme cela a été fait en Figure 2, par une courbe moyenne linéaire par morceaux, dont chaque segment de droite correspond à une phase de fonctionnement suivant l'un des deux modes prédéfinis, chaque segment de droite correspondant à des phases en mode permanent T₁, T₂ présente une pente moyenne L' comprise entre les valeurs de seuil S₁, S₂ citées précédemment.

Par exemple, la première valeur de seuil S₁ et la deuxième valeur de seuil S₂ sont, en valeur absolue, comprises entre 0,35 et 0,45 km/h par 1000 tr/min/sec.

De préférence, ces valeurs de seuil S₁, S₂ définissent une plage admissible de préférence égale à l'intervalle[-0,4 ; 0,4].

Une autre caractéristique importante du procédé conforme à l'invention consiste à limiter l'amplitude, en durée Δt₀ et en variation de démultiplication ΔL₀, d'une phase de fonctionnement transitoire T₀.

En particulier, on limite la durée Δt₀ d'une phase en mode transitoire T₀ à une valeur comprise entre une troisième S₃ et une quatrième S₄ valeurs de seuil.

De préférence, la troisième valeur de seuil S₃ est sensiblement égale à 0,3 secondes, et la quatrième valeur de seuil S₄ est sensiblement égale à 0,7 secondes.

En phase de fonctionnement suivant le mode transitoire T₀ comprise entre deux changements de modes consécutifs, on limite la valeur absolue de la variation moyenne ΔL₀ du rapport de démultiplication, à une valeur comprise entre une cinquième S₅ et une sixième S₆ valeurs de seuil positives..

Lors du changement de mode initial de la phase de fonctionnement en mode transitoire, on détermine le sens de variation du rapport de démultiplication L et :
- si le sens de variation est positif, on affecte une première et une deuxième valeurs fixes respectivement à la cinquième valeur de seuil S₅ et à la sixième valeur de seuil S₆ ;
- si le sens de variation est négatif, on affecte une troisième et une quatrième valeurs fixes respectivement à la cinquième valeur de seuil S₅ et à la sixième valeur de seuil S₆.

Par exemple, la première valeur fixe est sensiblement égale à 35 km/h/1000 tr/min, la deuxième valeur fixe est sensiblement égale à 80 km/h/1000 tr/min, la troisième valeur de seuil fixe est sensiblement égale à 25 km/h/1000 tr/min, et la quatrième valeur fixe est sensiblement égale à 50 km/h/1000 t/min.

Ainsi, l'amplitude admise du saut de démultiplication dans le cas assimilé à un passage de rapports en rétrogradation est plus limitée que celle correspondant à un passage au rapport supérieur.

Enfin, une autre caractéristique importante du procédé conforme à l'invention consiste à admettre de faibles variations, lors de phases T₁, T₂ en mode permanent, de la démultiplication réelle L autour du segment de droite représentant l'évolution moyenne de la démultiplication L.

Cela revient à limiter, à chaque instant, la valeur du rapport de démultiplication L dans une plage de valeurs centrées sur une valeur moyenne égale au rapport de démultiplication à l'instant initial de la phase de fonctionnement en mode permanent, augmentée du produit de ladite variation moyenne par unité de temps L', par la période de temps entre ledit instant initial et l'instant considéré, ladite plage étant d'amplitude E prédéterminée.

L'amplitude E prédéterminée peut être fixe ou donnée par une cartographie à deux entrées constituées, par exemple, de la valeur du couple-moteur, et de la valeur du régime-moteur.

L'amplitude admise au cours du segment d'évolution moyenne du rapport de démultiplication est de préférence de l'ordre de 20 à 100 tr/min., et si l'amplitude est constante, de préférence égale 50 tr/min.

## Revendications

1. Procédé de commande d'une chaîne de traction à variation continue d'un véhicule automobile, ladite chaîne de traction (1) comportant un ensemble moteur (2) dont l'arbre de sortie (8) entraîne un arbre de roue (9) par l'intermédiaire d'un variateur (4) adapté pour modifier de façon continue le rapport des vitesses de rotation de l'arbre de roue (9) et de l'arbre de sortie moteur (8), procédé dans lequel on définit un intervalle de temps élémentaire (ti), et sur chaque intervalle de temps élémentaire :
- on estime la valeur d'une variable (P1) de commande d'accélération ;
- on estime la valeur de la vitesse du véhicule (V) ;
- on estime la valeur de la vitesse de rotation (ω) de l'arbre de sortie (8) ;
- on commande la vitesse de rotation (ω) de l'arbre de sortie moteur (8) en fonction desdites valeurs estimées (P1, V, ω)
- on réalise ladite commande de la façon suivante :
- on détermine un mode de fonctionnement parmi un mode permanent et un mode transitoire, en fonction d'un ensemble de variables comprenant lesdites valeurs estimées (P1, V, ω) ;
- on corrige la valeur de vitesse de rotation (ω) de l'arbre de sortie ; ledit procédé étant **caractérisé en ce qu'**on réalise ladite
correction de sorte que
- si le mode déterminé est le mode permanent, la variation moyenne par unité de temps (L') du rapport de démultiplication (L) sur une période (T) de plusieurs intervalles de temps élémentaires (ti), est comprise entre une première valeur de seuil (S1) négative et une deuxième valeur de seuil (S2) positive et on limite à chaque instant la valeur du rapport de démultiplication (L) dans une plage de valeurs centrées sur une valeur moyenne égale au rapport de démultiplication (L) à l'instant initial de la phase de fonctionnement en mode permanent, augmentée du produit de ladite variation moyenne par unité de temps (L'), par la période de temps entre ledit instant initial et l'instant considéré, ladite plage étant d'amplitude (E) prédéterminée;
- si le mode déterminé est le mode transitoire, ladite variation moyenne par unité de temps (L') du rapport de démultiplication (L) est en dehors de la plage de valeurs définie par les première (S1) et deuxième (S2) valeurs de seuil.

2. Procédé de commande suivant la revendication 1, **caractérisé en ce que** ladite amplitude (E) correspond sensiblement à une variation de la vitesse du moteur, égale à 50 tr/min.

3. Procédé de commande suivant la revendication 1 ou 2" **caractérisé en ce que** la première valeur de seuil (S1) est, en valeur absolue, égale à la deuxième valeur de seuil (S2).

4. Procédé de commande suivant l'une quelconque des revendications 1 à 3, **caractérisé en ce que** la période (T) est d'une durée supérieure à 1 seconde, et la première valeur de seuil (S1) et la deuxième valeur de seuil (S2) sont, en valeur absolue, comprises entre 0,35 et 0,45.

5. Procédé de commande suivant l'une quelconque des revendications 1 à 4, **caractérisé en ce qu'**on limite la durée (ΔTo) d'une phase en mode transitoire(To) à une valeur comprise entre une troisième (S3) et une quatrième (S4) valeurs de seuil.

6. Procédé de commande suivant la revendication 5, **caractérisé en ce que** la troisième valeur de seuil (S3) est sensiblement égale à 0, 3 seconde.

7. Procédé de commande suivant la revendication 5 ou 6, **caractérisé en ce que** la quatrième valeur de seuil (S4) est sensiblement égale à 0,7 seconde.

8. Procédé de commande suivant l'une quelconque des revendications 1 à 7, **caractérisé en ce qu'**on limite la valeur absolue de la variation moyenne (ΔLo) du rapport de démultiplication (L), sur une phase de fonctionnement en mode transitoire comprise entre deux changements de modes consécutifs, à une valeur comprise entre une cinquième (S5) et une sixième (S6) valeurs de seuil positives.

9. Procédé de commande suivant la revendication 8, **caractérisé en ce que** lors du changement de mode initial de la phase de fonctionnement en mode transitoire, on détermine le sens de variation du rapport de démultiplication (L) et :
- si le sens de variation est positif, on affecte une première et une deuxième valeurs fixes respectivement à la cinquième valeur de seuil (55) et à la sixième valeur de seuil (S6) ;
- si le sens de variation est négatif, on affecte une troisième et une quatrième valeurs fixes respectivement à la cinquième valeur de seuil (S5) et à la sixième valeur de seuil (S6).

10. Procédé de commande suivant la revendication 9, **caractérisé en ce que** la première valeur fixe est supérieure à la troisième valeur fixe, et la deuxième valeur fixe est supérieure à la quatrième valeur fixe.

11. Procédé de commande suivant la revendication 10, **caractérisé en ce que** la première valeur fixe est sensiblement égale à 35 km/h/1000 tr/min.

12. Procédé de commande suivant la revendication 10 ou 11, **caractérisé en ce que** la deuxième valeur fixe est sensiblement égale à 80 km/h/1000 tr/min.

13. Procédé de commande suivant l'une quelconque des revendications 10 à 12, **caractérisé en ce que** la troisième valeur fixe est sensiblement égale à 25km/h/1000 tr/min.

14. Procédé de commande suivant l'une quelconque des revendications 10 à 11, **caractérisé en ce que** la quatrième valeur fixe est sensiblement égale à 50 km/h/1000 tr/min.

15. Procédé de commande suivant la revendication 14, **caractérisé en ce que** ladite amplitude (E) est sensiblement égale à 50 tr/min.

16. Procédé de commande suivant l'une quelconque des revendications 10 à 15, **caractérisé en ce que** la variable de commande d'accélération (P1) représente la position de la pédale d'accélération.

17. Procédé de commande suivant l'une quelconque des revendications 10 à 16, **caractérisé en ce qu'**on estime la pente de la route et l'ensemble de variables comprend la valeur de pente estimée.

18. Procédé de commande suivant la revendication 17, **caractérisé en ce qu'**on définit une période de détermination de mode, et on détermine que le mode de fonctionnement est le mode transitoire dans l'un au moins des cas suivants :
- sur ladite période de détermination de mode, la variation de la valeur de vitesse (V) et la variation de la valeur de pente sont, en valeur absolue, inférieures à des valeurs de seuil respectives prédéterminées, et la variation de la valeur de la variable de commande d'accélération est, en valeur absolue, supérieure à une valeur de seuil prédéterminée ;
- sur ladite période de détermination de mode, la variation de la valeur de la variable de commande d'accélération et la variation de la valeur de pente sont, en valeur absolue, inférieures à des valeurs de seuil respectives prédéterminées, et la variation de la valeur de vitesse et, en valeur absolue, supérieure à une valeur de seuil prédéterminé; et
- sur ladite période de détermination de mode, la variation de la valeur de la variable de commande d'accélération (P1) et la variation de la valeur de vitesse (V) sont, en valeur absolue, inférieures à des valeurs de seuil respectives prédéterminées, et la variation de la valeur de pente est, en valeur absolue, supérieure à une valeur de seuil prédéterminée.

## Claims

1. Method of controlling a continuously-variable drivetrain of a motor vehicle, the said drivetrain (1) comprising a motor assembly (2) the output shaft (8) of which drives a wheel shaft (9) via a variable-speed drive (4) designed to continuously alter the ratio of the rotational speeds of the wheel shaft (9) and of the motor output shaft (8), in which method an elementary time interval (ti) is defined, and over each elementary time interval:
- the value of an acceleration command variable (P1) is estimated;
- the value of the vehicle speed (V) is estimated;
- the value of the rotational speed (ω) of the output shaft (8) is estimated;
- the rotational speed (ω) of the motor output shaft (8) is controlled as a function of the said estimated values (P1, V, ω) ;
- the said control is had in the following way:
- a mode of operation is determined from among a st4eady-state mode and a transient mode, on the basis of a set of variables comprising the said estimated values (P1, V, ω) ;
- the value of the rotational speed (ω) of the output shaft is corrected;
the said method being **characterized in that** the said correction is performed in such a way that:
- if the determined mode is the steady-state mode, the mean variation per unit time (L') of the step-down ratio (L) over a period (T) of several elementary time intervals (ti) is comprised between a negative first threshold value (S1) and a positive second threshold value (S2), and the value of the step-down ratio (L) is at every instant limited within a range of values centred on the mean value equal to the step-down ratio (L) at the initial moment of the phase of operation in steady-state mode, increased by the product of the said mean variation per unit time (L') times the timer period between the said initial moment and the moment in question, the said range being of predetermined amplitude (E);
- if the determined mode is the transient mode, the said mean variation per unit time (L') of the step-down ratio (L) is outside of the range of values defined by the first (S1) and second (S2) threshold values.

2. Control method according to Claim 1, **characterized in that** the said amplitude (E) corresponds substantially to a variation in engine speed of 50 rpm.

3. Control method according to Claim 1 or 2, **characterized in that** the first threshold value (S1) is, in terms of absolute value, equal to the second threshold value (S2).

4. Control method according to any one of Claims 1 to 3, **characterized in that** the period (T) is of a duration in excess of 1 second, and the first threshold value (S1) and the second threshold value (S2) are, in terms of absolute value, comprised between 0.35 and 0.45.

5. Control method according to any one of Claims 1 to 4, **characterized in that** the duration (ΔTo) of a phase in transient mode (To) is limited to a value comprised between a third (S3) and a fourth (S4) threshold value.

6. Control method according to Claim 5, **characterized in that** the third threshold value (S3) is substantially equal to 0.3 seconds.

7. Control method according to Claim 5 or 6, **characterized in that** the fourth threshold value (S4) is substantially equal to 0.7 seconds.

8. Control method according to any one of Claims 1 to 7, **characterized in that** the absolute value of the mean variation (ΔLo) in step-down ratio (L) over a phase of operation in transient mode comprised between two consecutive mode changes is limited to a value comprised between a fifth (S5) and a sixth (S6) threshold value, both of which are positive.

9. Control method according to Claim 8, **characterized in that** during the change if the operating phase is from initial mode to transient mode, the direction of variation or step-down ratio (L) is determined, and:
- if the direction of variation is positive, respective first and second fixed values are assigned to the fifth threshold value (S5) and to the sixth threshold value (S6) ;
- if the direction of variation is negative, respective third and fourth fixed values are assigned to the fifth threshold value (S5) and to the sixth threshold value (S6).

10. Control method according to Claim 9, **characterized in that** the first fixed value is greater than the third fixed value and the second fixed value is greater than the fourth fixed value.

11. Control method according to Claim 10, **characterized in that** the first fixed value is substantially equal to 35 km/h/1000 rpm.

12. Control method according to Claim 10 or 11, **characterized in that** the second fixed value is substantially equal to 80 km/h/1000 rpm.

13. Control method according to any one of Claims 10 to 12, **characterized in that** the third fixed value is substantially equal to 25 km/h/1000 rpm.

14. Control method according to any one of Claims 10 to 11, **characterized in that** the fourth fixed value is substantially equal to 50 km/h/1000 rpm.

15. Control method according to Claim 14, **characterized in that** the said amplitude (E) is substantially equal to 50 rpm.

16. Control method according to any one of Claims 10 to 15, **characterized in that** the acceleration command variable (p1) represents the position of the accelerator pedal.

17. Control method according to any one of Claims 10 to 16, **characterized in that** the gradient of the road is estimated and the set of variables comprises the estimated gradient value.

18. Control method according to Claim 17, **characterized in that** a mode determining period is defined and the mode of operation is determined as being the transient mode in at least one of the following scenarios:
- over the said mode determining period, the variation in the value of speed (V) and the variation in the value of gradient are, in terms of absolute value, lower than predetermined respective threshold values, and the variation in the value of the acceleration command value is, in terms of absolute value, greater than a predetermined threshold value;
- over the said mode determining period, the variation in the value of the acceleration command variable and the variation in the gradient value are, in terms of absolute value, lower than predetermined respective threshold values and the variation in speed value is, in terms of absolute value, greater than a predetermined threshold value; and
- over the said mode determining period, the variation in the value of the acceleration command variable (P1) and the variation in the value of speed (V) are, in terms of absolute value, lower than predetermined respective threshold values, and the variation in the gradient value is, in terms of absolute value, greater than a predetermined threshold value.

## Patentansprüche

1. Verfahren zur Steuerung eines stufenlosen Antriebsstrangs eines Kraftfahrzeugs, wobei der Antriebsstrang (1) eine Motoranordnung (2) aufweist, deren Ausgangswelle (8) eine Radwelle (9) mittels eines drehzahlregelbaren Antriebs (4) antreibt, der dazu ausgeführt ist, das Drehzahlverhältnis der Radwelle (9) und der Motorausgangswelle (8) zu ändern, wobei bei dem Verfahren ein elementares Zeitintervall (ti) definiert wird und über jedes elementare Zeitintervall:
- der Wert einer Beschleunigungssteuerungsvariablen (P1) wird;
- der Geschwindigkeitswert des Fahrzeugs (V) geschätzt wird;
- der Drehzahlwert (ω) der Ausgangswelle (8) geschätzt wird;
- die Drehzahl (ω) der Motorausgangswelle (8) als Funktion der geschätzten Werte (P1, V, ω) gesteuert wird;
- wobei die Steuerung auf folgende Weise erfolgt:
- ein Betriebsmodus wird zwischen einem Dauermodus und einem Übergangsmodus als Funktion eines Satzes von Variablen, die die geschätzten Werte (P1, V, ω) umfassen, bestimmt;
- der Drehzahlwert (ω) der Ausgangswelle wird korrigiert;
wobei das Verfahren **dadurch gekennzeichnet ist, dass** die Korrektur auf folgende Weise erfolgt:
- wenn der bestimmte Modus der Dauermodus ist, liegt die mittlere Änderung pro Zeiteinheit (L') der Untersetzung (L) über einen Zeitraum (T) von mehreren elementaren Zeitintervallen (ti) zwischen einem ersten, negativen Schwellwert (S1) und einem zweiten, positiven Schwellwert (S2), und der Wert der Untersetzung (L) wird zu jedem Zeitpunkt auf einen Wertebereich begrenzt, der auf einem mittleren Wert gleich der Untersetzung (L) zu dem anfänglichen Zeitpunkt der Betriebsphase im Dauermodus, erhöht um das Produkt der mittleren Änderung pro Zeiteinheit (L') mal der Zeitdauer zwischen dem anfänglichen Moment und dem betreffenden Moment, wobei der Bereich eine vorbestimmtem Amplitude (E) aufweist, zentriert;
- wenn der bestimmte Modus der Übergangsmodus ist, liegt die mittlere Änderung pro Zeiteinheit (L') der Untersetzung (L) außerhalb des durch den ersten (S1) und den zweiten (S2) Schwellwert definierten Wertebereichs.

2. Steuerverfahren nach Anspruch 1, **dadurch gekennzeichnet, dass** die Amplitude (E) im Wesentlichen einer Änderung der Motordrehzahl von 50 U/min entspricht.

3. Steuerverfahren nach Anspruch 1 oder 2, **dadurch gekennzeichnet, dass** der erste Schwellwert (S1) als Absolutwert gleich dem zweiten Schwellwert (S2) ist.

4. Steuerverfahren nach einem der Ansprüche 1 bis 3, **dadurch gekennzeichnet, dass** die Zeitdauer (T) länger als 1 Sekunde ist und der erste Schwellwert (S1) und der zweite Schwellwert (S2) als Absolutwert zwischen 0,35 und 0,45 liegen.

5. Steuerverfahren nach einem der Ansprüche 1 bis 4, **dadurch gekennzeichnet, dass** die Dauer (ΔTo) einer Phase im Übergangsmodus (To) auf einen Wert zwischen einem dritten (S3) und einem vierten (S4) Schwellwert begrenzt wird.

6. Steuerverfahren nach Anspruch 5, **dadurch gekennzeichnet, dass** der dritte Schwellwert (S3) im Wesentlichen 0,3 Sekunden beträgt.

7. Steuerverfahren nach Anspruch 5 oder 6, **dadurch gekennzeichnet, dass** der vierte Schwellwert (S4) im Wesentlichen 0,7 Sekunden beträgt.

8. Steuerverfahren nach einem der Ansprüche 1 bis 7, **dadurch gekennzeichnet, dass** der Absolutwert der mittleren Änderung (ΔLo) der Untersetzung (L) über eine Betriebsphase im Übergangsmodus zwischen zwei aufeinander folgenden Modusänderungen auf einen Wert begrenzt wird, der zwischen einem fünften (S5) und einem sechsten (S6) Schwellwert liegt.

9. Steuerverfahren nach Anspruch 8, **dadurch gekennzeichnet, dass** bei der Änderung des Anfangsmodus der Betriebsphase im Übergangsmodus die Änderungsrichtung der Untersetzung (L) bestimmt wird, und:
- wenn die Änderungsrichtung positiv ist, ein erster und ein zweiter festgelegter Wert dem fünften Schwellwert (S5) bzw. dem sechsten Schwellwert (S6) zugeordnet werden;
- wenn die Änderungsrichtung negativ ist, ein dritter und ein vierter festgelegter Wert dem fünften Schwellwert (S5) bzw. dem sechsten Schwellwert (S6) zugeordnet werden.

10. Steuerverfahren nach Anspruch 9, **dadurch gekennzeichnet, dass** der erste festgelegte Wert größer als der dritte festgelegte Wert ist und der zweite festgelegte Wert größer als der vierte festgelegte Wert ist.

11. Steuerverfahren nach Anspruch 10, **dadurch gekennzeichnet, dass** der erste festgelegte Wert im Wesentlichen 35 kmh/1000 U/min beträgt.

12. Steuerverfahren nach Anspruch 10 oder 11, **dadurch gekennzeichnet, dass** der zweite festgelegte Wert im Wesentlichen 80 kmh/1000 U/min beträgt.

13. Steuerverfahren nach einem der Ansprüche 10 bis 12, **dadurch gekennzeichnet, dass** der dritte festgelegte Wert im Wesentlichen 25 kmh/1000 U/min beträgt.

14. Steuerverfahren nach einem der Ansprüche 10 bis 11, **dadurch gekennzeichnet, dass** der vierte festgelegte Wert im Wesentlichen 50 kmh/1000 U/min beträgt.

15. Steuerverfahren nach Anspruch 14, **dadurch gekennzeichnet, dass** die Amplitude (E) im Wesentlichen gleich 50 U/min ist.

16. Steuerverfahren nach einem der Ansprüche 10 bis 15, **dadurch gekennzeichnet, dass** die Beschleunigungssteuerungsvariable (P1) die Position des Fahrpedals darstellt.

17. Steuerverfahren nach einem der Ansprüche 10 bis 16, **dadurch gekennzeichnet, dass** die Straßensteigung geschätzt wird und der Satz von Variablen den geschätzten Steigungswert umfasst.

18. Steuerverfahren nach Anspruch 17, **dadurch gekennzeichnet, dass** eine Modusbestimmungszeitdauer definiert wird und bestimmt wird, dass der Betriebsmodus in mindestens einem der folgenden Fälle der Übergangsmodus ist:
- über die Modusbestimmungszeitdauer sind die Änderung des Geschwindigkeitswerts (V) und die Änderung des Steigungswerts als Absolutwert geringer als die jeweiligen vorbestimmten Schwellwerte, und der Änderungswert der Beschleunigungssteuerungsvariablen ist als Absolutwert größer als ein vorbestimmter Schwellwert;
- über die Modusbestimmungszeitdauer sind die Änderung der Beschleunigungssteuerungsvariablen und die Änderung des Steigungswerts als Absolutwert geringer als die jeweiligen vorbestimmten Schwellwerte, und die Änderung des Geschwindigkeitswerts ist als Absolutwert größer als ein vorbestimmter Schwellwert; und
- über die Modusbestimmungszeitdauer sind die Änderung des Werts der Beschleunigungssteuerungsvariablen (P1) und die Änderung des Geschwindigkeitswerts (V) als Absolutwert geringer als die vorbestimmten Schwellwerte, und die Änderung des Steigungswerts ist als Absolutwert größer als ein vorbestimmter Schwellwert.
